# EUROPEAN PATENT APPLICATION

(11) **EP 3 521 975 A1**
(43) Date of publication of application: **07.08.2019**
(21) Application number: 17855305.3
(22) Date of filing: 21.06.2017
(51) Int. Cl.: G06F 3/01, G06F 3/16, G10L 25/63, G06F 13/00, G10L 15/10, G10L 15/22, G10L 13/08

(54) **INFORMATION PROCESSING DEVICE**

(30) Priority: 27.09.2016 JP 2016187806
(71) Applicant: Sony Corporation, Tokyo 108-0075 (JP); Sony Mobile Communications Inc., Shinagawa-ku Tokyo 140-0002 (JP)
(72) Inventor: NAKAGAWA, Ayumi, Tokyo 108-0075 (JP); SAKAI, Shimon, Tokyo 108-0075 (JP); HOSOKAWA, Satoshi, Tokyo 140-0002 (JP)
(74) Representative: MFG Patentanwälte Meyer-Wildhagen Meggle-Freund Gerhard PartG mbB
(86) International application number: PCT/JP2017/022766
(87) International publication number: WO 2018/061346

(57) **Abstract**

[Object] To perform dynamic output control in accordance with emotions of the user even in a case in which it is difficult for a target person to perform operations related to outputs.

[Solution] There is provided an information processing apparatus including: an estimation unit that estimates a comfort/discomfort level of a target person on the basis of a non-verbal expression extracted from sound information related to the target person; and an output control unit that performs output control on the basis of the comfort/discomfort level estimated by the estimation unit. In addition, there is provided an information processing apparatus including: a collecting unit that collects sound information related to a target person; and an output unit that performs an information output based on a control signal. The output unit performs an information output based on the control signal that is generated on the basis of a comfort/discomfort level of the target person, which is estimated from a non-verbal expression extracted from the sound information.

## Description

### Technical Field

The present disclosure relates to an information processing apparatus.

### Background Art

In recent years, various methods for estimating user's feelings have been proposed. Also, such methods include one of estimating user's feelings in relation to operations of apparatuses. A technology of detecting a user's reaction performed on a terminal that serves as a sharing destination and causing the terminal that serves as the sharing destination to display the reaction in content sharing of a plurality of terminals is disclosed in Patent Literature 1.

### Citation List

### Patent Literature

Patent Literature 1: JP 2015-60380A

### Summary of Invention

### Technical Problem

Incidentally, a user who views content with a terminal that serves as a sharing destination is not provided with operation authority of the content in content sharing as described in Patent Literature 1 in many cases. Therefore, even in a case in which the user desires to stop reproduction of the content or desires to reproduce a part or the like of the content again, it is difficult for the user who views the content with the terminal that serves as the sharing destination to realize such an operation.

Thus, the present disclosure proposes a novel and improved information processing apparatus capable of performing dynamic output control in accordance with an emotion of the user even in a case in which it is difficult for the target person to perform an operation related to an output.

### Solution to Problem

According to the present disclosure, there is provided an information processing apparatus including: an estimation unit that estimates a comfort/discomfort level of a target person on the basis of a non-verbal expression extracted from sound information related to the target person; and an output control unit that performs output control on the basis of the comfort/discomfort level estimated by the estimation unit.

In addition, according to the present disclosure, there is provided an information processing apparatus including: a collecting unit that collects sound information related to a target person; and an output unit that performs an information output based on a control signal. The output unit performs an information output based on the control signal that is generated on the basis of a comfort/discomfort level of the target person, which is estimated from a non-verbal expression extracted from the sound information.

### Advantageous Effects of Invention

According to the present disclosure, it is possible to perform dynamic output control in accordance with emotions of the user even in a case in which it is difficult for a target person to perform operations related to outputs as described above.

Note that the effects described above are not necessarily limitative. With or in the place of the above effects, there may be achieved any one of the effects described in this specification or other effects that may be grasped from this specification.

### Brief Description of Drawings

FIG. 1 is a diagram illustrating a configuration example and an outline of an information processing system according to an embodiment of the present disclosure.
FIG. 2 is a functional block diagram of an information processing terminal and an information processing server according to the embodiment.
FIG. 3 is a diagram illustrating examples of types of information that the information processing terminal collects and non-verbal expressions of a target person that an estimation unit extracts according to the embodiment.
FIG. 4 is a diagram for describing information output stopping control performed by an output control unit according to the embodiment.
FIG. 5 is a diagram for describing output expression changing control performed by the output control unit according to the embodiment.
FIG. 6 is a diagram for describing output modal changing control performed by the output control unit according to the embodiment.
FIG. 7 is a diagram for describing a target person with a psychological barrier according to the embodiment.
FIG. 8 is a diagram illustrating an example of recommendation information control performed by the output control unit according to the embodiment.
FIG. 9 is a diagram illustrating an output example of a reason for control according to the embodiment.
FIG. 10 is a diagram illustrating an example of output control based on learning data according to the embodiment.
FIG. 11 is a diagram illustrating an example of output control in a case in which a target person with a psychological barrier is an owner user according to the embodiment.
FIG. 12 is a diagram illustrating an example of a case in which a plurality of target persons is present and the output control unit performs output control on the basis of presence of a target person with comfort/discomfort levels below a threshold value according to the embodiment.
FIG. 13A is a diagram illustrating an example of a case in which a plurality of target persons is present and the output control unit performs output control for improving a sum of the comfort/discomfort levels according to the embodiment.
FIG. 13B is a diagram illustrating an example of a case in which a plurality of target persons is present and the output control unit performs output control for improving the sum of the comfort/discomfort levels according to the embodiment.
FIG. 14 is a diagram illustrating an example of output control in a case in which the comfort/discomfort levels exceed the threshold value according to the embodiment.
FIG. 15 is another example illustrating output control in a case in which the comfort/discomfort levels exceed the threshold value according to the embodiment.
FIG. 16 is a flowchart illustrating operations of the information processing server according to the embodiment.
FIG. 17 is a hardware configuration example according to the present disclosure.

### Description of Embodiments

Hereinafter, (a) preferred embodiment(s) of the present disclosure will be described in detail with reference to the appended drawings. Note that, in this specification and the appended drawings, structural elements that have substantially the same function and structure are denoted with the same reference numerals, and repeated explanation of these structural elements is omitted.

Note that description will be given in the following order.
1. Embodiment
   1.1. Outline and system configuration example according to embodiment
   1.2. Functional configuration example of information processing terminal 10
   1.3. Functional configuration example of information processing server 20
   1.4. Specific example of output control based on comfort/discomfort level
   1.5. Output control based on comfort/discomfort levels of plurality of persons
   1.6. Example of output control in case in which comfort/discomfort level exceeds threshold value
   1.7. Operations of information processing server 20
2. Hardware configuration example
3. Conclusion

### <1. Embodiment>

### <<1.1. Outline and system configuration example according to embodiment>>

First, an outline of an embodiment of the present disclosure will be described. An information processing system according to the embodiment has a function of estimating a comfort/discomfort level of a target person in response to output information on the basis of non-verbal expressions extracted from various kinds of information related to the target person and controlling the aforementioned output information on the basis of results of the estimation. For example, the information processing system according to the embodiment may estimate the aforementioned comfort/discomfort level from sound information, image information, sensor information, and the like related to the target person and perform output control.

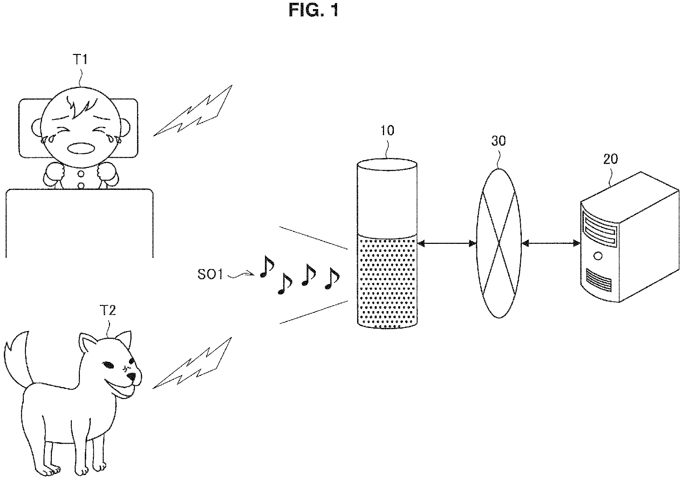

FIG. 1 is a diagram illustrating a configuration example and an outline of the information processing system according to the embodiment. Referring to FIG. 1, the information processing system according to the embodiment includes an information processing terminal 10 and an information processing server 20. Also, the information processing terminal 10 and the information processing server 20 are connected to each other via a network 30 to enable mutual information communication.

### (Information processing terminal 10)

The information processing terminal 10 according to the embodiment has a function of collecting various kinds of information related to the target person. The information processing terminal 10 according to the embodiment may collect sound information, image information, sensor information, and the like related to the target person, for example. The aforementioned information that the information processing terminal 10 collects can be used to extract non-verbal expressions as described above. Also, the information processing terminal 10 according to the embodiment has a function of presenting various kinds of information to a user on the basis of control performed by the information processing server 20. The information processing terminal 10 according to the embodiment may represent visual information or audio information to the user.

In FIG. 1, an example of a case in which the information processing terminal 10 according to the embodiment collects sound information of a target person T1 that is a baby or a target person T2 that is a pet is illustrated. In his manner, the target person according to the embodiment may include animals or the like. Also, FIG. 1 illustrates an example of a case in which the information processing terminal 10 outputs output information SO1 that is audio information. As illustrated in FIG. 1, the information processing terminal 10 according to the embodiment may collect crying voice of the target T1 in response to the output information SO1 or animal call of the target person T2, for example.

The information processing terminal 10 according to the embodiment can be a mobile phone, a smartphone, a tablet, a wearable device, a personal computer (PC), or the like. In addition, the information processing terminal 10 according to the embodiment may be a display device, a projector, any of various agent devices, or a robot. The information processing terminal 10 according to the embodiment may be any of various information processing apparatuses that have a function of collecting information that can be used to extract non-verbal expressions related to a target person and a function of outputting visual information or audio information.

### (Information processing server 20)

The information processing server 20 according to the embodiment is an information processing apparatus that has a function of estimating a comfort/discomfort level of a target person on the basis of the target person's non-verbal expression extracted from various kinds of information that the information processing terminal 10 collects. In a case of the example illustrated in FIG. 1, the information processing server 20 according to the embodiment may estimate that the comfort/discomfort level of the target person leans toward discomfort on the basis of the crying voice (or animal call) of the target person T1 or the target person T2 collected by the information processing terminal 10, for example.

Also, the information processing server 20 according to the embodiment has a function of controlling output information output by the information processing terminal 10 on the basis of the aforementioned estimated comfort/discomfort level. In the case of the example illustrated in FIG. 1, the information processing server 20 according to the embodiment can perform output control related to the output information SO1 on the basis of the fact that the comfort/discomfort level of the target person T1 or the target person T2 is below a threshold value, that is, estimation of discomfort of the target person T1 or the target person T2 in response to the output information SOI, for example. For example, the information processing server 20 may cause the output of the output information SO1 to be stopped. According to the aforementioned functions that the information processing server 20 in the embodiment has, it is possible to perform dynamic output control in accordance with an emotion of the target person even in a case in which it is difficult for the target person to perform an operation related to the output.

### (Network 30)

The network 30 has a function of connecting the information processing terminal 10 to the information processing server 20. The network 30 may include a public line network such as the Internet, a telephone line network, or a satellite communication network, various local area networks (LANs) including Ethernet (registered trademark), a wide area network (WAN), or the like. In addition, the network 30 may include a dedicated line network such as Internt protocol-virtual private network (IP-VPN). Also, the network 30 may include a wireless communication network such as Wi-Fi (registered trademark) or Bluetooth (registered trademark).

The configuration example of the information processing system according to the embodiment has been described above. Note that although the case in which the information processing terminal 10 and the information processing server 20 are realized as respectively independent information processing apparatuses has been described as an example in the above description using FIG. 1, configuration examples of the information system according to the embodiment are not limited to such an example. The information processing terminal 10 and the information processing server 20 according to the embodiment may be realized as a single information processing apparatus.

Meanwhile, the respective functions that the information processing terminal 10 and the information processing server 20 according to the embodiment have may be realized by a plurality of, such as three, information processing apparatuses. The system configuration example according to the embodiment can be flexibly modified in accordance with the amount of information handled, a system specification, operation conditions, and the like.

### <<1.2. Functional configuration example of information processing terminal 10>>

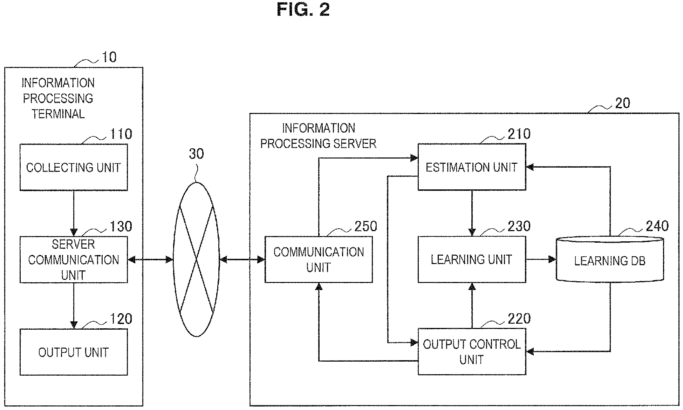

Next, a functional configuration example of the information processing terminal 10 according to the embodiment will be described. FIG. 2 is a functional block diagram of the information processing terminal 10 and the information processing server 20 according to the embodiment. Referring to FIG. 2, the information processing terminal 10 according to the embodiment includes a collecting unit 110, an output unit 120, and a server communication unit 130. Hereinafter, features that the respective configurations described above have will mainly be described in relation to the configurations.

### (Collecting unit 110)

The collecting unit 110 has a function of collecting various kinds of information related to the target person. As described above, various kinds of information collected in the embodiment can be used to estimate the comfort/discomfort level using the information processing server 20. The collecting unit 110 according to the embodiment can collect sound information, image information, sensor information, and the like related to the target person, for example.

To do so, the collecting unit 110 according to the embodiment can be configured to include a microphone, an imaging sensor, an infrared sensor, a luminance sensor, an acceleration sensor, a gyro sensor, a geomagnetic sensor, a clock, or the like, for example. Note that the various sensors described above are just examples, and the collecting unit 110 may be configured to include sensors other than those described above. The collecting unit 110 according to the embodiment can be configured to include a wide range of sensors for collecting information that can be used to extract non-verbal expressions related to the target person.

### (Output unit 120)

The output unit 120 has a function of performing information output based on control signals that the information processing server 20 generates. Here, the aforementioned control signals are generated on the basis of the comfort/discomfort level of the target person that are estimated from the non-verbal expressions extracted from the information that the collecting unit 110 collects.

At this time, the output unit 120 according to the embodiment can output visual information or sound information based on the aforementioned control signals. To do so, the output unit 120 can be configured to include a display device that outputs the visual information or a speaker that outputs the sound information. Here, the aforementioned display device can be realized by a cathode ray tube (CRT) display device, a liquid crystal display (LCD) device, an organic light emitting diode (OLED) device, a touch panel, a projector, or the like, for example. Also, the output unit 120 according to the embodiment may have a sound synthesizing function such as text-to-speech (TTS).

### (Server communication unit 130)

The server communication unit 130 has a function of communicating information with the information processing server 20. Specifically, the server communication unit 130 according to the embodiment transmits the sound information, the image information, the sensor information and the like collected by the collecting unit 110 to the information processing server 20. Also, the server communication unit 130 according to the embodiment receives the control signals, which are generated on the basis of the comfort/discomfort level of the target person estimated from the aforementioned respective information, from the information processing server 20.

The functional configuration example of the information processing terminal 10 according to the embodiment has been described above. Note that the functional configuration described above is just an example, and functional configurations of the information processing terminal 10 according to the embodiment are not limited to such an example. The information processing terminal 10 according to the embodiment may further include a configuration that realizes various functions that the information processing server 20 has, for example. The information processing terminal 10 may be configured to include a part or all of an estimation unit 210, an output control unit 220, a learning unit 230, and a learning DB 240, which will be described later, for example. Also, the information processing terminal 10 may further include an input unit or the like that receives input operations of an operator, for example. The functional configuration of the information processing terminal 10 according to the embodiment can be flexibly modified.

### <<1.3. Functional configuration example of information processing server 20>>

Next, a functional configuration of the information processing server 20 according to the embodiment will be described with reference to FIG. 2. Referring to FIG. 2, the information processing server 20 according to the embodiment includes an estimation unit 210, an output control unit 220, a learning unit 230, a learning DB 240, and a communication unit 250. Hereinafter, features of the respective configurations described above will mainly be described in relation to the configurations.

### (Estimation unit 210)

The estimation unit 210 has a function of estimating the comfort/discomfort level of the target person on the basis of various kinds of information that the information processing terminal 10 collects. More specifically, the estimation unit 210 according to the embodiment may estimate the aforementioned comfort/discomfort level on the basis of the non-verbal expressions extracted from the sound information, the image information, the sensor information, and the like related to the target person. According to the aforementioned functions that the estimation unit 210 according to the embodiment has, it is possible to estimate the comfort/discomfort level of the target person regardless of linguistic utterance of the target person and to significantly reduce processing burden as compared with a case in which language analysis is performed. Note that in the following description will be provided on the assumption that an emotion of the target person leans toward comfort as the comfort/discomfort level is higher and the emotion of the target person leans toward discomfort as the comfort/discomfort level is lower.

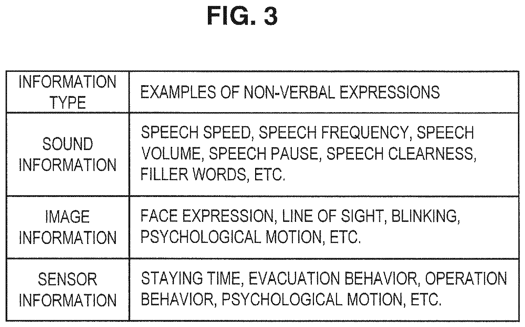

FIG. 3 is a diagram illustrating examples of types of information that the information processing terminal 10 collects and non-verbal expressions of the target person that the estimation unit 210 extracts. As illustrated in FIG. 3, the estimation unit 210 according to the embodiment can extract non-verbal expressions related to the target person from the sound information that the information processing terminal 10 collects. At this time, the non-verbal expression extracted by the estimation unit 210 may include a speech speed, a speech frequency, a speech volume, a speech pause, speech clarity, filler words, and the like of the target person, for example. According to the aforementioned functions that the estimation unit 210 according to the embodiment has, it is possible to estimate the comfort/discomfort level in terms of multiple pints from the sound information related to the target person.

The estimation unit 210 according to the embodiment can estimate the comfort/discomfort level of the target person in a case in which the aforementioned non-verbal expression extracted from sound information coincides with an expression that typically indicates comfort or discomfort or on the basis of the fact that the non-verbal expression is different from regular expressions of the target or the like. The estimation unit 210 may estimate that the comfort/discomfort level of the target person leans toward discomfort on the basis of the fact that the speech speed of the target person is lower than the regular speed, for example. At this time, the estimation unit 210 can perform the aforementioned estimation on the basis of learning data that is stored in the learning DB 240, which will be described later.

In addition, the estimation unit 210 according to the embodiment can extract non-verbal expressions related to the target person from image information that the information processing terminal 10 collects as illustrated in FIG. 3. At this time, the non-verbal expressions extracted by the estimation unit 210 may include a face expression, a line of sight, blinking, psychological motion, and the like of the target person, for example. Note that the aforementioned psychological motion described here includes a motion of hands or legs such as folding of arms and shaking of legs, movement of a head such as facing upward or downward, and the like, for example. Also, in a case in which the target person is an animal, the psychological motion may include motions of a tail, whiskers, or the like. According to the aforementioned functions that the estimation unit 210 according to the embodiment has, it is possible to estimate the comfort/discomfort level of the target person from movement that does not depend on sound information.

The estimation unit 210 according to the embodiment can estimate the comfort/discomfort level of the target person in a case in which the aforementioned non-verbal expression extracted from the image information coincides with an expression that typically indicates comfort or discomfort or on the basis of the fact that the non-verbal expression is different from regular expressions of the target, and the like, for example. The estimation unit 210 may estimate that the comfort/discomfort level of the target person leans toward discomfort on the basis of the fact that the face expression of the target person coincides with a crying face, for example.

In addition, as illustrated in FIG. 3, the estimation unit 210 according to the embodiment can extract non-verbal expressions related to the target from sensor information that the information processing terminal 10 collects. At this time, the non-verbal expression extracted by the estimation unit 210 may include a staying time, an evacuation behavior, an operating behavior, a psychological motion, and the like of the target person, for example. According to the aforementioned function that the estimation unit 210 according to the embodiment has, it is possible to estimate the comfort/discomfort level of the target person from a wider viewpoint using an inexpensive sensor.

The estimation unit 210 according to the embodiment can estimate the comfort/discomfort level of the target person in a case in which the aforementioned non-verbal expression extracted from the sensor information coincides with an expression that typically indicates comfort or discomfort or on the basis of the fact that the non-verbal expression is different from regular expressions of the target person, and the like, for example. The estimation unit 210 may estimate that the comfort/discomfort level of the target person leans toward comfort on the basis of a staying time of the target person exceeding a threshold value, for example.

### (Output control unit 220)

The output control unit 220 has a function of performing output control related to the information processing terminal 10 on the basis of the comfort/discomfort level estimated by the estimation unit 210. That is, the output control unit 220 according to the embodiment generates control signals for controlling the information processing terminal 10 on the basis of the aforementioned comfort/discomfort level. At this time, the output control unit 220 according to the embodiment may perform output control on the basis of the fact that the estimated comfort/discomfort level of the target person is below the threshold value, that is, on the basis of the fact that the emotion of the target person is estimated to lean to discomfort. According to the aforementioned functions that the output control unit 220 according to the embodiment has, it is possible to perform dynamic output control in accordance with the emotion of the user even in a case in which it is difficult for the target person to perform an operation related to the output.

In addition, the output control unit 220 according to the embodiment may perform output control on the basis of learning data stored in the learning DB 240. The output control unit 220 can cause the information processing terminal 10 to output output information that is estimated to be liked by the target person on the basis of the learning data in a case in which the estimated comfort/discomfort level of the target person is below the threshold value, for example. According to the aforementioned functions that the output control unit 220 according to the embodiment has, it is possible to significantly increase a probability that the comfort/discomfort level of the target person increases.

Also, at this time, the output control unit 220 according to the embodiment may perform output control on the basis of learning data specific to the target person that is stored in the learning DB 240. That is, the output control unit 220 according to the embodiment can perform output control using learning data individualized on the basis of information collected from the target person. According to the aforementioned functions that the output control unit 220 according to the embodiment has, it is possible to perform highly accurate output control in accordance with preference or the like of the target person.

Meanwhile, the output control unit 220 according to the embodiment may perform output control on the basis of learning data related to a cluster into which the target person is classified. That is, the output control unit 220 according to the embodiment can also perform output control using learning data clustered on the basis of an age, a sex, and the like of the target person. According to the aforementioned functions that the output control unit 220 according to the embodiment has, it is possible to perform output control such that the comfort/discomfort level of the target person increases even in a case in which learning data related to the individual has not been accumulated.

### (Learning unit 230)

The learning unit 230 has a function of learning various kinds of information that the information processing terminal 10 collects and the comfort/discomfort level estimated by the estimation unit 210 in an associated manner. In addition, the learning unit 230 has a function of learning the aforementioned comfort/discomfort level and the control signals generated by the output control unit 220 in an associated manner. The learning unit 230 can perform the aforementioned learning by a mechanical learning method such as a support vector machine (SVM), a neural network, or a regression model and a statistical method, for example. Also, the learning unit 230 according to the embodiment has a function of causing the learning DB 240 to store data related to the aforementioned learning.

### (Learning DB 240)

The learning DB 240 has a function of storing learning data related to the collected information and the comfort/discomfort level estimated on the basis of the information. In addition, the learning DB 240 has a function of storing learning data related to the aforementioned comfort/discomfort level and the control signals generated on the basis of the comfort/discomfort level. As described above, the aforementioned learning data may be individualized learning data or clustered learning data.

### (Communication unit 250)

The communication unit 250 has a function of communicating information with the information processing terminal 10. Specifically, the communication unit 250 according to the embodiment receives sound information, image information, sensor information, and the like related to the target person from the information processing terminal 10. Also, the communication unit 250 according to the embodiment transmits the control signals that are generated on the basis of the received information to the information processing terminal 10.

The functional configuration example of the information processing server 20 according to the embodiment has been described above. Note that the aforementioned functional configuration is just an example, and the functional configuration example of the information processing server 20 according to the embodiment is not limited to such an example. As described above, all or a part of the configurations that the information processing server 20 according to the embodiment include may be realized as functions of the information processing terminal 10.

Also, a part of the configurations that the information processing server 20 includes can also be realized as functions of another device. For example, the estimation unit 210, the learning unit 230, and the learning DB 240 may be realized as functions of other devices that are different from the information processing server 20. In addition, the information processing server 20 according to the embodiment may further include configurations other than those described above. The functional configuration of the information processing server 20 according to the embodiment can be flexibly modified.

### <<1.4. Specific examples of output control based on comfort/discomfort level>>

Next, output control based on a comfort/discomfort level according to the embodiment will be described by exemplifying specific examples. As described above, the output control unit 220 according to the embodiment can perform output control related to the information processing terminal 10 on the basis of comfort/discomfort levels of the target persons estimated by the estimation unit 210. Here, the target persons according to the embodiment includes a person who cannot control output information due to a physical barrier and a person who cannot control output information due to a psychological barrier. Hereinafter, output control for the aforementioned target persons with the physical barrier and the psychological barrier will be described in detail.

### (Example of output control for target person with physical barrier)

First, an example of output control for the target person with the physical barrier according to the embodiment will be described. The target person with the physical barrier according to the embodiment includes a person who cannot physically operate the information processing terminal 10, such as a baby or an animal as illustrated in FIG. 1, for example. In addition, the target person with the physical barrier can include a guest who does not know an operating method, an aged person, a disabled person, a foreigner, and the like.

That is, the target person with the physical barrier according to the embodiment may be a person who has difficulty in performing an operation related to an output by himself or herself. According to the information processing server 20 of the embodiment, it is possible to perform flexible output control in accordance with the emotion of the target person with the physical barrier as described above.

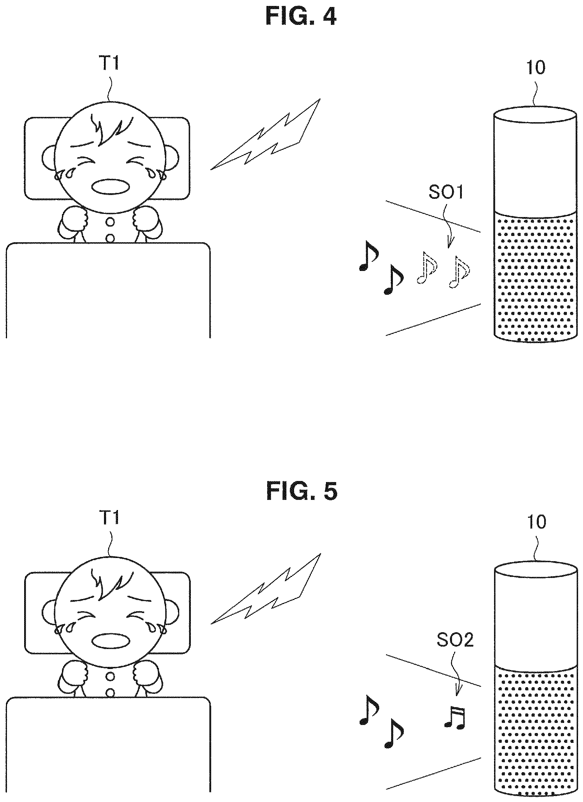

More specifically, the output control unit 220 according to the embodiment may cause the information processing terminal 10 to stop outputting information on the basis of the fact that the comfort/discomfort level of the target person is below a threshold value, for example. FIG. 4 is a diagram for describing information output stopping control performed by the output control unit 220 according to the embodiment. In FIG. 4, output information SO1 that is alarm sound output by the information processing terminal 10 and a baby that generates crying voice in response to the output information SO1, that is, the target person T1 with a physical barrier are illustrated.

At this time, the estimation unit 210 may estimate that the comfort/discomfort level of the target person T1 leans toward discomfort by recognizing the crying voice from sound information of the target person T1 or may perform the aforementioned estimation by recognizing a crying face from image information. Also, the output control unit 220 according to the embodiment can cause the information processing terminal 10 to stop outputting the output information SO1 on the basis of the fact that the comfort/discomfort level estimated from the sound information, the image information, or the like of the target person T1 by the estimation unit 210 is below the threshold value.

According to the aforementioned functions that the output control unit 220 according to the embodiment has, it is possible to cause the output information to stop instead of the target person in a case in which target person with the physical barrier such as a baby is feeling uncomfortable with the output information as illustrated in FIG. 4, for example.

In addition, the output control unit 220 according to the embodiment may cause the information processing terminal 10 to change an output expression on the basis of the fact that the comfort/discomfort level of the target person is below a threshold value, for example. FIG. 5 is a diagram for describing output expression change control performed by the output control unit 220 according to the embodiment. In FIG. 5, the target person T1 that generates crying voice in response to alarm sound (not illustrated) that the information processing terminal 10 outputs and output information SO2 that has been changed by the output control unit 220 are illustrated.

As described above, the output control unit 220 according to the embodiment can cause an output expression such as alarm sound that the target person that is a baby feels uncomfortable with, for example, to be changed to an output expression such as other alarm sound or music. According to the aforementioned functions that the output control unit 220 according to the embodiment has, it is possible to increase a probability that the comfort/discomfort level of the target person can be improved without stopping outputting of information.

In addition, the learning unit 230 according to the embodiment may learn the comfort/discomfort level estimated by the estimation unit 210 and the control signals generated by the output control unit 220 in an associated manner at this time. It is possible to specify output information with which the target person feels uncomfortable, output information that the target person prefers, and the like by the learning unit 230 according to the embodiment repeatedly performing the aforementioned learning and to thereby perform efficient output control.

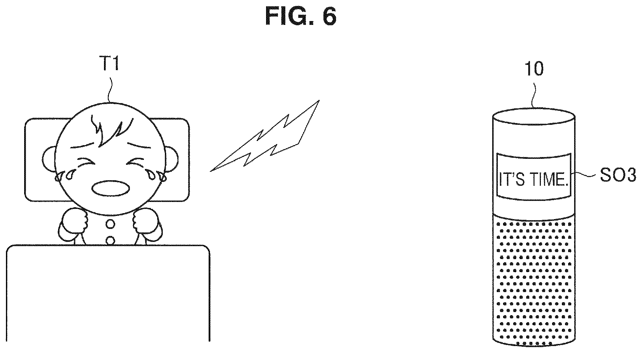

In addition, the output control unit 220 according to the embodiment may cause the information processing terminal 10 to perform output modal changing on the basis of the fact that the comfort/discomfort level of the target person is below a threshold value, for example. FIG. 6 is a diagram for describing output modal changing control performed by the output control unit 220 according to the embodiment. In FIG. 6, the target person T1 that generates crying voice in response to alarm sound (not illustrated) output by the information processing terminal 10 and output information SO3 that has been changed by the output control unit 220.

In this manner, the output control unit 220 according to the embodiment may cause the information processing terminal 10 to output visual information instead of the audio information with which the target person that is a baby, for example, is feeling uncomfortable. That is, the output control unit 220 according to the embodiment can perform output modal selection of the information processing terminal 10 on the basis of the comfort/discomfort level of the target person. According to the aforementioned functions that the output control unit 220 according to the embodiment has, it is possible to improve the comfort/discomfort level of the target person without dropping precision of the information.

An example of output control for the target person with the physical barrier according to the embodiment has been described above. Note that in the above description, the case in which the estimation unit 210 estimates the comfort/discomfort level of the target person T1 that is a baby on the basis of the sound information or the image information has been described as an example. Meanwhile, the target person with a physical barrier according to the embodiment is not limited to such an example as described above. Also, the estimation unit 210 according to the embodiment can estimate the comfort/discomfort level of the target person from sensor information.

For example, the target person may be a guest who does not know the method of operating the information processing terminal 10 according to the embodiment. In this case, the estimation unit 210 according to the embodiment can also recognize, from the sensor information, an operation behavior of the target person to try to stop the alarm sound output from the information processing terminal 10, that is, a behavior of searching for a stop switch from the sensor information that the information processing terminal 10 collects and estimate the comfort/discomfort level.

### (Example of output control for target person with psychological barrier)

Next, an example of output control for a target person with a psychological barrier according to the embodiment will be described. The target person with a psychological barrier according to the embodiment can be defined as a target person who has difficulty in performing an operation related to an output in an emotional level although the target person understands the method of operating the information processing terminal 10.

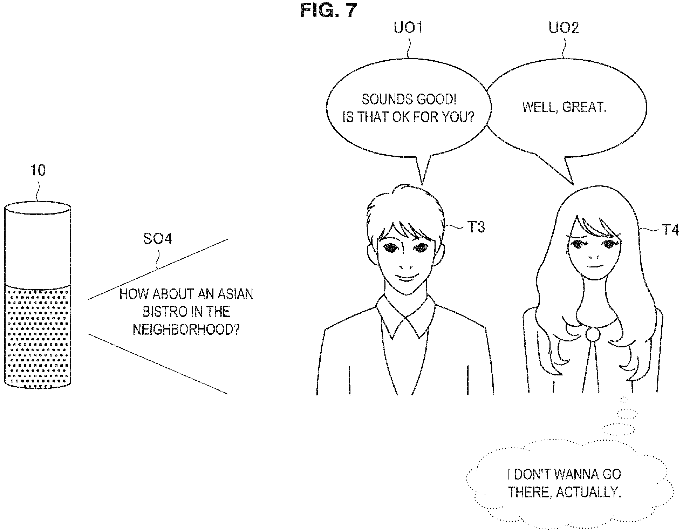

FIG. 7 is a diagram for describing a target person with a psychological barrier according to the embodiment. In FIG. 7, output information S04 that the information processing terminal 10 outputs and speeches UO1 and UO2 of target persons T3 and T4 in response to the output information S4 are illustrated. Here, the output information SO4 may be recommendation information of restaurants or the like as illustrated in FIG. 4. Also, the target person T3 may be an owner user of the information processing terminal 10.

Referring to FIG. 7, both the target persons T3 and T4 perform positive speeches in response to the output information SO4 for recommending an Asian bistro. However, the target person T4 has a negative opinion in its mind as illustrated in FIG. 7. In this manner, a case in which it is not possible to state true thought in an emotional level depending on a relationship between the target persons T3 and T4, such as a family or a guest, is assumed. That is, it is possible to state that the target person T4 illustrated in FIG. 4 is a target person with a psychological barrier.

In this case, the information processing server 20 according to the embodiment can estimate a comfort/discomfort level of the target person T4 with the psychological barrier and perform output control of the information processing terminal 10 on the basis of the comfort/discomfort level. More specifically, the output control unit 220 according to the embodiment can cause the information processing terminal 10 to output second recommendation information that is different from first information on the basis of the fact that the comfort/discomfort level of the target person estimated after the output of the first recommendation information is below a threshold value.

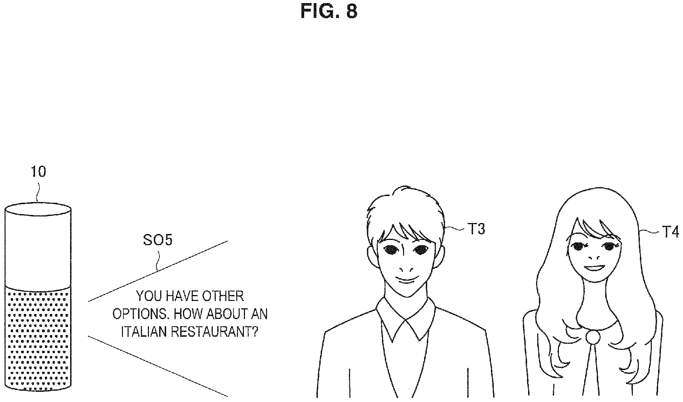

FIG. 8 is a diagram illustrating an example of recommendation information control performed by the output control unit 220 according to the embodiment. Output information SO5 that the information processing terminal 10 outputs is illustrated in FIG. 8, and here, the output information SO5 may be recommendation information that is different from the output information SO4 illustrated in FIG. 7. That is, in the example illustrated in FIG. 8, the output control unit 220 causes the information processing terminal 10 to output the output information SO5 that is second recommendation information that is different from the output information SO4 that is the first information illustrated in FIG. 7.

Note that at this time, the estimation unit 210 according to the embodiment may estimate the comfort/discomfort level of the target person T4 from the speech U02 illustrated in FIG. 7. The estimation unit 210 can estimate that the comfort/discomfort level of the target person T4 leans toward discomfort from information such as a speech volume, a speech pause, and filler words included in sound information related to the speech UO2, for example.

According to the aforementioned functions that the information processing server 20 according to the embodiment has, it is possible to estimate the true thought of the target person and cause different recommendation information to be output even in a case in which the target person with a psychological barrier performs a positive utterance in relation to the recommendation information.

In addition, in a case in which output control for the target person with the psychological barrier as illustrated in FIG. 8 has been performed, the output control unit 220 according to the embodiment may present that the output control has been performed to the target person T3 who is the owner user of the information processing terminal 10. That is, in a case in which output control based on the comfort/discomfort level has been performed, the output control unit 220 according to the embodiment can cause the information processing terminal 10 to output a reason that the output control has been performed.

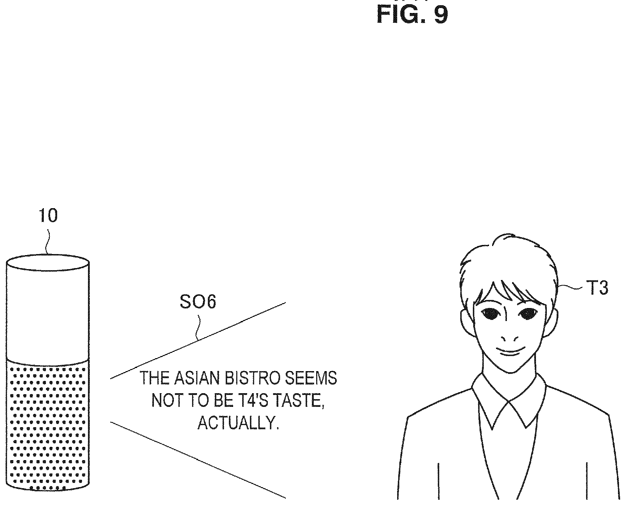

FIG. 9 is a diagram illustrating an output example of a control reason according to the embodiment. In FIG. 9, a target person T3 and output information SO6 that the information processing terminal 10 outputs are illustrated. Here, the output information SO6 may include information that discomfort of the target person T4 in response to the output information SO4 illustrated in FIG. 7 has been estimated, as illustrated in FIG. 9. In this manner, the output control unit 220 according to the embodiment can present a reason that the output control is performed to the target person T3 that is the owner user after performing the output control as illustrated in FIGS. 7 and 8.

Note that at this time, the output control unit 220 may perform control such that only the target person T3 can notice the output information SO6. The output control unit 220 may cause output information SO6 to be output as sound or may cause the output information SO6 to be transferred to a separate terminal or the like that the target person T3 owns, for example, on the basis of the fact that detection of presence of the target person T4 stops.

According to the aforementioned functions that the output control unit 220 according to the embodiment has, the owner user of the information processing terminal can clearly notice a reason that output control has been performed and take advantage of the reason for setting of the information processing terminal 10 and the information processing server 20 and personal relationships in the future.

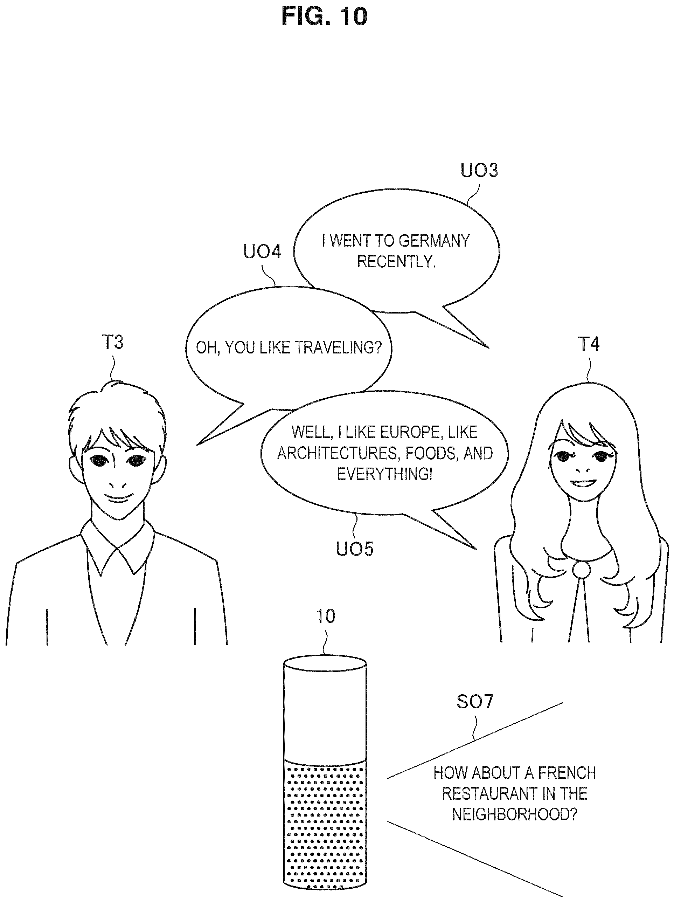

In addition, the output control unit 220 according to the embodiment may perform output control on the basis of the learning data stored in the learning DB 240 when the second recommendation information is caused to be output. FIG. 10 is a diagram illustrating an example of output control based on the learning data according to the embodiment. In FIG. 10, speeches UO3 to UO5 of the target persons T3 and T4 and output information SO7 of the information processing terminal 10 are illustrated.

Here, the speeches UO3 to UO5 may be speech related to preference of the target person T4 as illustrated in FIG. 10. The learning unit 230 according to the embodiment can learn that the target person T4 is interested in Europe from the speech UO5 and can cause the learning DB 240 to store a result of the learning, for example. At this time, the learning unit 230 can perform learning specific to the individual of the target person T4, or in a case in which the learning data related to the target person T4 has not been accumulated, the learning unit 230 can perform learning related to a cluster to which the target person T4 belongs. In this case, the estimation unit 210 according to the embodiment can perform clustering by estimating a sex, an age, and the like of the target person T4 from collected sound information or image information, for example.

The output control unit 220 according to the embodiment may perform output control on the basis of learning data learned as described above. That is, the output information SO7 illustrated in FIG. 10 may be output information based on learning data learned from the speeches UO3 to UO5. The output control unit 220 can causes the information processing terminal 10 to output the output information SO7 that is second recommendation information in accordance with the preference of the target person T4 on the basis of the learning data stored in the learning DB 240.

The example of output control for the target person with the psychological barrier according to the embodiment has been described above. Note that in the above description, the case in which the target person with the psychological barrier is a guest or the like for whom it is difficult to state true thought to the owner user of the information processing terminal 10 in an emotional level has been described as an example. However, the target person with the psychological barrier according to the embodiment is not limited to such an example. The target person with the psychological barrier according to the embodiment can be an owner user of the information processing terminal 10. For example, in a case in which an owner user is hesitating to perform operation due to complication of the operation even in a situation in which the owner user can physically operate the information processing terminal 10, it is possible to state that the owner user is the target person with the psychological barrier.

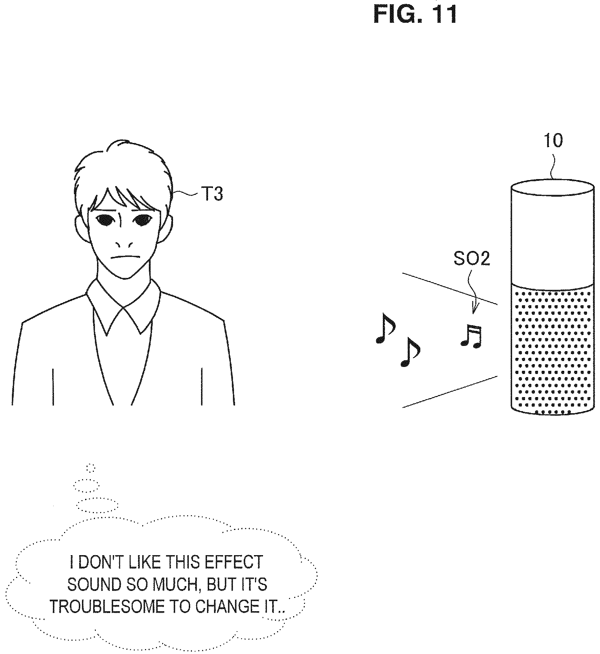

FIG. 11 is a diagram illustrating an example of output control in a case in which the target person with the psychological barrier according to the embodiment is an owner user. In FIG. 11, a target person T3 that is hesitating to operate the information processing terminal 10 due to complication and output information SO2 that is output by the information processing terminal 10 are illustrated. Here, the target person T3 may be an owner user of the information processing terminal 10. Also, the output information SO2 may be sound information such as alarm sound dynamically changed by the output control unit 220.

In this manner, the output control unit 220 according to the embodiment can change the alarm sound or the like that the information processing terminal 10 is caused to output, on the basis of the fact that a comfort/discomfort level of the target person T3 that is the owner user is below the threshold value. Note that at this time, the estimation unit 210 according to the embodiment can estimate the comfort/discomfort level of the target person T3 on the basis of sound information or image information. The estimation unit 210 may perform the aforementioned estimation on the basis of the fact that the target person T3 sighs or clicks its tongue when certain alarm sound is output, for example. Also, the estimation unit 210 may perform the aforementioned estimation on the basis of the fact that the target person T3 frowns when certain alarm sound is output, for example.

According to the aforementioned functions that the information processing server 20 according to the embodiment has, it is possible to significantly reduce an operation burden of the owner user. Note that although not illustrated in the drawing, the output control unit 220 according to the embodiment can cause the information processing terminal 10 to output an inquiry for whether or not to change the alarm sound or the like in a case in which control as described above is performed. In this case, the output control unit 220 can perform more effective output control based on a user's response, and it is also expected that learning efficiency of the learning unit 230 is improved.

### <<1.5. Output control based on comfort/discomfort levels of plurality of persons>>

Next, the case in which the estimation unit 210 estimates a comfort/discomfort level of one person and the output control unit 220 performs output control based on the comfort/discomfort level has been described in the above detailed description of output control based on the comfort/discomfort level of a plurality of persons according to the embodiment. Meanwhile, the estimation unit 210 according to the embodiment may estimate comfort/discomfort levels according to a plurality of target persons. In this case, the output control unit 220 according to the embodiment can perform output control on the basis of the estimated comfort/discomfort levels of the plurality of persons.

For example, the output control unit 220 according to the embodiment may perform output control on the basis of the fact that target persons with comfort/discomfort levels below a threshold are present in a case in which the estimation unit 210 estimates the comfort/discomfort levels of the plurality of target persons. That is, in a case in which at least one target person who feels uncomfortable with an output of the information processing terminal 10 is present, the output control unit 220 according to the embodiment can perform control to change the output.

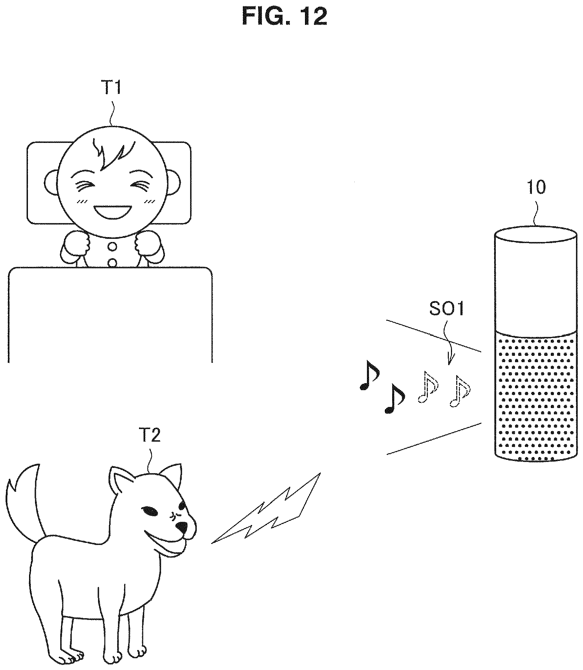

FIG. 12 is a diagram illustrating an example of a case in which the output control unit 220 according to the embodiment performs output control on the basis of the fact that target persons with comfort/discomfort levels below the threshold value are present in a case in which there is a plurality of target persons. In FIG. 12, a plurality of target persons T1 and T2 and output information SO1 output by the information processing terminal 10 are illustrated. Here, the target person T1 may be a target person who is not feeling uncomfortable with the output information SO1 as illustrated in FIG. 12. Meanwhile, the target person T2 may be a target person who is feeling uncomfortable with the output information SO1 as illustrated in FIG. 12.

In this case, the output control unit 220 according to the embodiment may cause the output of the output information SO1 to stop on the basis of the fact that the estimated comfort/discomfort level of the target person T2 is below the threshold value. According to the aforementioned functions that the output control unit 220 according to the embodiment has, it is possible to perform output control in consideration of target persons one by one even in a case in which there is a plurality of target persons.

In addition, the output control unit 220 according to the embodiment can also perform output control to increase the sum of the comfort/discomfort levels in a case in which the estimation unit 210 estimates the comfort/discomfort levels of the plurality of target persons, for example. For example, the output control unit 220 according to the embodiment may perform output control such that the comfort/discomfort level of the group is maximized.

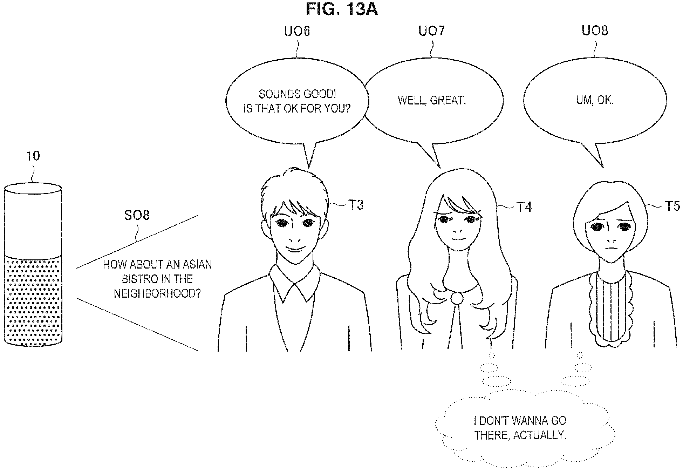

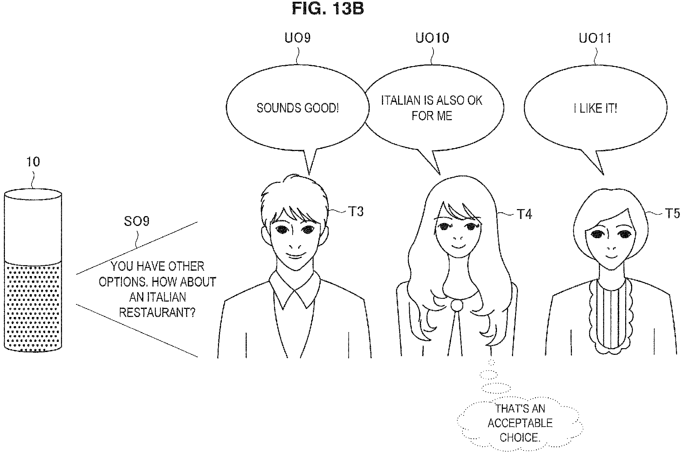

FIGS. 13A and 13B are diagrams illustrating an example of a case in which there is a plurality of target persons and the output control unit 220 according to the embodiment performs output control to increase the sum of the comfort/discomfort levels. In FIG. 13A, output information SO8 that is recommendation information of the information processing terminal 10 and speeches UO6 to UO8 of the target persons T3 to T5 in response to the output information SO8 are illustrated. Here, the speeches UO6 to UO8 of the target persons T3 to T5 may have content indicating positive (or not negative) opinions in response to the output information SO8 as illustrated in FIG. 13A. However, the target persons T4 and T5 are target persons with psychological barriers and have negative feelings in response to the output information SO8 in an emotional level.

In this case, the output control unit 220 according to the embodiment may perform output control to increase the sum of the comfort/discomfort levels of the target persons T3 to T5. The output control unit 220 can perform the aforementioned control on the basis of learning data related to the target persons T3 and T4 stored in the learning DB 240 or learning data related to a cluster to which the target persons T3 and T4 belong, for example.

In FIG. 13B, output information SO9 that is output information changed by the output control unit 220 and speeches UO9 to UO11 of the target persons T3 to T5 in response to the output information SO9 are illustrated. Here, the speeches UO9 to UO11 of the target persons T3 to T5 may have content indicating positive (or not negative) opinions in response to the output information SO9 as illustrated in FIG. 13B. However, the target person T4 has a neutral feeling in response to the output information SO9 in its mind.

In this manner, the output control unit 220 according to the embodiment may increase, with priority, the sum of the comfort/discomfort levels in a case in which it is difficult to cause the comfort/discomfort levels of all the target persons to lean to comfort or the like. According to the aforementioned functions that the output control unit 220 according to the embodiment has, it is possible to maintain a high comfort/discomfort level of the group while performing output control by placing priority on major target persons.

Note that in the above description using FIGS. 13A and 13B, the case in which the output control unit 220 causes the information processing terminal 10 to output single recommendation information piece has been described. Meanwhile, the output control unit 220 according to the embodiment can cause the information processing terminal 10 to output a plurality of recommendation information pieces. In a case in which a group of target persons who have positive feelings and a group of target persons who have negative feelings with respect to first recommendation information are estimated, for example, the output control unit 220 according to the embodiment may cause respectively different second recommendation information to be output to the two groups.

By the output control unit 220 performing the aforementioned control, it is possible to perform a more effective information output of increasing the comfort/discomfort levels of the target persons that belong to the respective groups even in a case in which opinions are divided for a destination of a group trip or the like, for example.

### <<1.6. Example of output control in case in which comfort/discomfort level exceeds threshold value>>

Next, an example of output control in a case in which a comfort/discomfort level exceeds a threshold value according to the embodiment will be described. In the above description, the case in which the output control unit 220 according to the embodiment performs output control on the basis of the fact that the estimated comfort/discomfort level of the target person is below the threshold value has been described. Meanwhile, the output control unit 220 according to the embodiment may perform output control on the basis of the fact that the comfort/discomfort level exceeds a threshold value. That is, the output control unit 220 according to the embodiment can perform the output control related to the information processing terminal 10 on the basis of the fact that the comfort/discomfort level of the target person has been estimated to lean toward comfort.

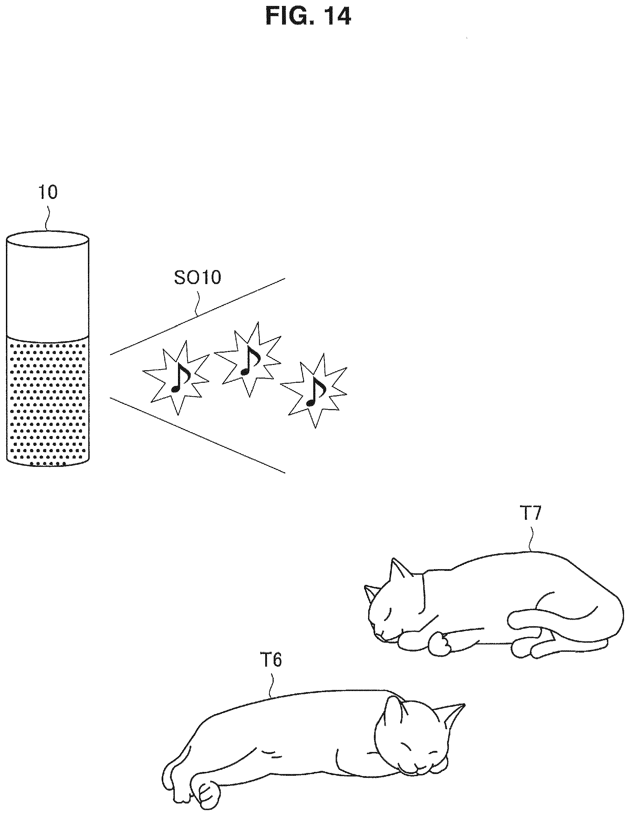

FIG. 14 is a diagram illustrating an example of output control in a case in which the comfort/discomfort level according to the embodiment exceeds the threshold value. In FIG. 14, target persons T6 and T7 that are animals and output information SO10 of the information processing terminal 10 are illustrated. Here, the target persons T6 and T7 may be in a relaxed state, and the comfort/discomfort levels of the target persons T6 and T7 may be in a state of leaning to comfort.

In this case, the output control unit 220 according to the embodiment can cause the information processing terminal 10 to output the output information SO10 on the basis of the fact that the comfort/discomfort levels of the target persons T6 and T7 estimated by the estimation unit 210 exceed the threshold value. More specifically, the target persons T6 and T7 illustrated in FIG. 14 may be wild animals that have gathered at a private residence, a shop, or the like. The output control unit 220 according to the embodiment can cause the information processing terminal 10 to output the output information SO10 for chasing away the target persons T6 and T7 on the basis of the fact that the comfort/discomfort levels of the target persons T6 and T7 that are the wild animals exceed a threshold value. At this time, the output control unit 220 can also chase away the wild animals without affecting persons in the surroundings by causing uncomfortable sound at a frequency higher than an audible range of persons to be output, for example.

According to the aforementioned functions that the output control unit 220 according to the embodiment has, it is possible to cause a high-frequency sound to be output only in a case in which it is necessary to chase away wild animals and the like and to reduce power consumption and the like related to information outputs.

Note that in the case of the example illustrated in FIG. 14, the estimation unit 210 may estimate the comfort/discomfort levels of the target persons T6 and T7 from collected sensor information, for example. The estimation unit 210 may estimate that the comfort/discomfort levels of the target persons T6 and T7 lean to comfort on the basis of the fact that it is detected that the target persons T6 and T7 have stayed in a region for a predetermined time or longer with an infrared sensor or the like that the information processing terminal 10 includes, for example.

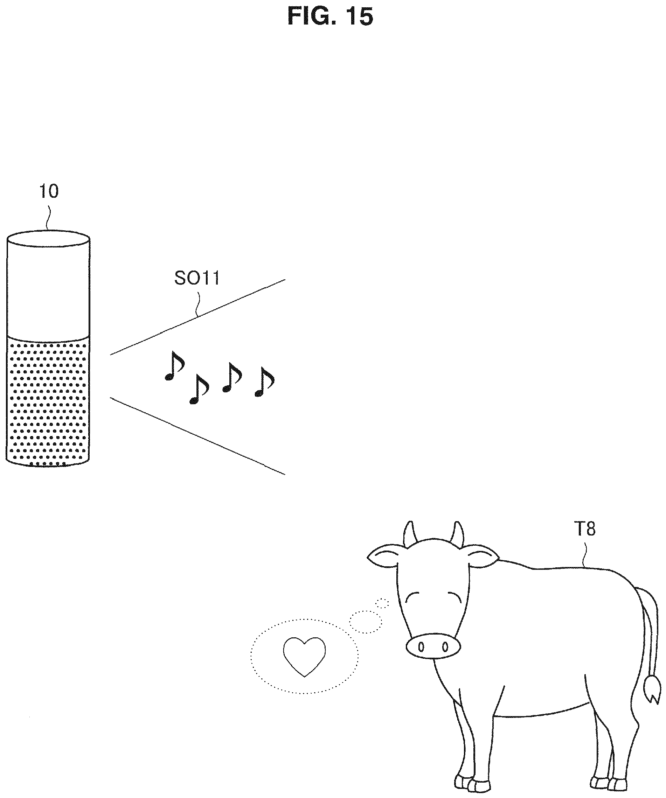

Also, FIG. 15 is another example illustrating output control in a case in which a comfort/discomfort level exceeds a threshold value according to the embodiment. In FIG. 15, a target person T8 that is a farm animal and output information SO11 of the information processing terminal 10 are illustrated. Here, the target person T8 may be in a relaxed state, and the comfort/discomfort level of the target person T8 may be in a state of leaning to comfort.

In this case, the output control unit 220 according to the embodiment can cause the information processing terminal 10 to output the output information SO11 on the basis of the fact that a comfort/discomfort level of the target person T8 estimated by the estimation unit 210 exceeds a threshold value. For example, the output control unit 220 may cause the information processing terminal 10 to output the output information SO11 with which the comfort/discomfort level of the target person T8 that is a farm animal becomes higher. Also, the output control unit 220 may cause predetermined alarm sound, music, or the like to be output in a case in which the comfort/discomfort level of the target person T8 exceeds the threshold value. In this case, it is possible to apply conditions using conditioned reflex such as so-called Pavlov's dog and to more efficiently handle the farm animal and the like.

### <<1.7. Operations of information processing server 20>>

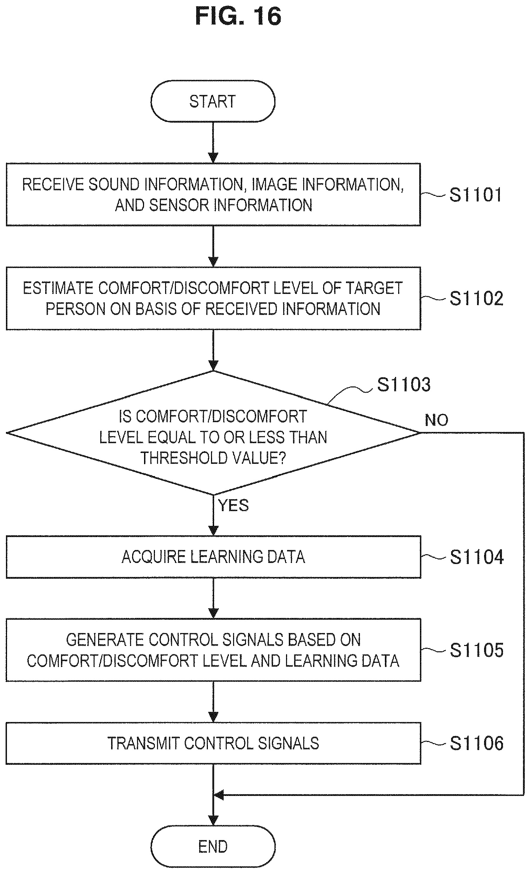

Next, operations of the information processing server 20 according to the embodiment will be described in detail. FIG. 16 is a flowchart illustrating operations of the information processing server 20 according to the embodiment. Note that in the following description, an example of output control that the information processing server 20 performs in a case in which a comfort/discomfort level of a target person is below the threshold value will be described.

Referring to FIG. 16, the communication unit 250 of the information processing server 20 receives sound information, image information, sensor information, and the like that the information processing terminal 10 collects first (S1101).

Next, the estimation unit 210 estimates the comfort/discomfort level of the target person on the basis of various kinds of information received in Step S1101 (S1102). At this time, the estimation unit 210 may perform estimation related to comfort/discomfort levels of a plurality of persons. Also, the estimation unit 210 can estimate the comfort/discomfort level on the basis of learning data stored in the learning DB 240 as described above. In addition, the learning unit 230 may learn various kinds of information acquired in Step S1101 and the comfort/discomfort level estimated in Step S1102 in an associated manner and cause the learning DB 240 to store the learning data at this time.

Next, the output control unit 220 determines whether or not the comfort/discomfort level of the target person estimated in Step S1102 is below the threshold value (S1103).

Here, in a case in which the comfort/discomfort level is equal to or greater than the threshold value (S1103: NO), the information processing server 20 ends a series of processing related to the output control.

Meanwhile, in a case in which the comfort/discomfort level is below the threshold value (S1103: YES), the output control unit 220 acquires learning data related to the target person or the cluster to which the target person belongs from the learning DB 240 (S1104).

If Step S1104 is completed, then the output control unit 220 generates control signals for controlling the information processing terminal 10 on the basis of the comfort/discomfort level of the target person estimated in Step S1102 and the learning data acquired in Step S1104 (S1105). In addition, the learning unit 230 may learn the comfort/discomfort level estimated in Step S1102 and the aforementioned control signals in an associated manner and cause the learning DB 240 to store the learning data at this time.

Next, the communication unit 250 transmits the control signals generated in Step S1105 to the information processing terminal 10 (S1106), and the information processing server 20 ends a series of processing.

The flow of the operations of the information processing server 20 according to the embodiment has been described above in detail. Note that although the configuration example of the information processing server 20 in the case in which the comfort/discomfort level of the target person is below the threshold value has been described above, the information processing server 20 according to the embodiment can also perform output control on the basis of the fact that the comfort/discomfort level exceeds a threshold value as described above. In this case, the output control unit 220 may determine whether or not the comfort/discomfort level exceeds the threshold value in Step S1103 illustrated in FIG. 16.

### <2. Exemplary hardware configuration>

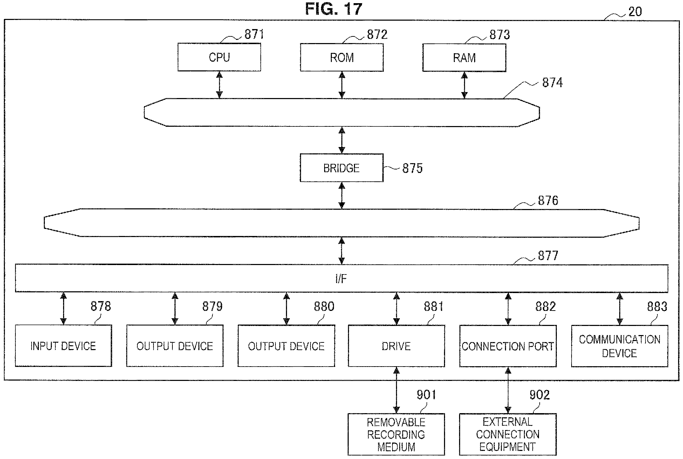

Next, an example of the hardware configuration common to the information processing terminal 10 and the information processing server 20 according to the present disclosure is now described. FIG. 17 is a block diagram illustrating an example of the hardware configuration of the information processing terminal 10 and the information processing server 20 according to the present disclosure. Referring to FIG. 17, the information processing terminal 10 and the information processing server 20 include, in one example, a CPU 871, a ROM 872, a RAM 873, a host bus 874, a bridge 875, an external bus 876, an interface 877, an input device 878, an output device 879, a storage 880, a drive 881, a connection port 882, and a communication device 883. Moreover, the hardware configuration shown here is illustrative, and some of components can be omitted. In addition, the information processing terminal 10 and the information processing server 20 may further include a component other than the components shown here.

### (CPU 871)

The CPU 871 functions as, in one example, an arithmetic processing unit or a control device, and controls some or all of the operations of each component on the basis of various programs recorded in the ROM 872, the RAM 873, the storage 880, or a removable recording medium 901.

### (ROM 872 and RAM 873)

The ROM 872 is a means for storing programs read into the CPU 871, data used for operation, or the like. The RAM 873 temporarily or permanently stores, in one example, a program to be read into the CPU 871, various parameters appropriately changing in executing the program, or the like.

### (Host bus 874, bridge 875, external bus 876, and interface 877)

The CPU 871, the ROM 872, and the RAM 873 are mutually connected via, in one example, the host bus 874 capable of high-speed data transmission. On the other hand, the host bus 874 is connected to the external bus 876 having a relatively low data transmission speed, in one example, via the bridge 875. In addition, the external bus 876 is connected to various components via the interface 877.

### (Input device 878)

Examples of the input device 878 include a mouse, a keyboard, a touch panel, buttons, a switch, a lever, or the like. Furthermore, examples of the input device 878 include a remote controller capable of transmitting a control signal using infrared rays or other radio waves (hereinafter referred to as a remote controller). In addition, the input device 878 includes a speech input device such as a microphone.

### (Output device 879)

The output device 879 is a device capable of visually or audibly notifying the user of the acquired information, which includes a display device such as a cathode ray tube (CRT), an LCD, or an organic EL, an audio output device such as a loudspeaker or a headphone, a printer, a mobile phone, a facsimile, or the like.

### (Storage 880)

The storage 880 is a device used to store various types of data. Examples of the storage 880 include a magnetic storage device such as hard disk drives (HDDs), a semiconductor storage device, an optical storage device, a magneto-optical storage device, or the like.

### (Drive 881)

The drive 881 is a device that reads information recorded on the removable recording medium 901 such as a magnetic disk, an optical disk, a magneto-optical disk, or a semiconductor memory or writes information to the removable recording medium 901.

### (Removable recording medium 901)

Examples of the removable recording medium 901 include a DVD medium, a Blu-ray (registered trademark) medium, an HD DVD medium, various kinds of semiconductor storage media, or the like. Of course, the removable recording medium 901 is preferably, in one example, an IC card or an electronic device mounted with a contactless IC chip.

### (Connection port 882)

The connection port 882 is a port used for connection with an external connection device 902, such as a universal serial bus (USB) port, an IEEE 1394 port, a small computer system interface (SCSI), an RS-232C port, or an optical audio terminal.

### (External connection device 902)

Examples of the external connection device 902 include a printer, a portable music player, a digital camera, a digital video camera, an IC recorder, or the like.

### (Communication device 883)

The communication device 883 is a communication device used for connection with a network, and examples thereof include a communication card for wired or wireless LAN, Bluetooth (registered trademark), or wireless USB (WUSB), a router for optical communication, a router for asymmetric digital subscriber line (ADSL), or a modem for various communications.

### <3. Conclusion>

As described above, the information processing server 20 according to the present disclosure has the function of extracting non-verbal expressions from sound information, image information, sensor information, and the like related to the target person and estimating the comfort/discomfort level of the target person. In addition, the information processing server 20 according to the present disclosure can perform output control related to the information processing terminal 10 on the basis of the estimated comfort/discomfort level. According to such a configuration, it is possible to perform dynamic output control in accordance with the emotion of the user even in a case in which it is difficult for the target person to perform an operation related to the output.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

For example, although the case in which the comfort/discomfort level is one-dimensional information has been described as an example in the aforementioned embodiment, the present technology is not limited to such an example. For example, the comfort/discomfort level according to the present disclosure may be two-dimensional information with directionality, such as two-dimensional vector, for example. In this case, the estimation unit 210 of the information processing server 20 can estimate more precise comfort/discomfort level and perform highly effective output control.

Also, the respective steps in the processing of the information processing server 20 described in the specification are not necessarily processed in a time-series manner in the order described as the flowchart. For example, the respective steps in the processing of the information processing server 20 may be processed in an order that is different from that described as the flowchart or may be processed in parallel.

Further, the effects described in this specification are merely illustrative or exemplified effects, and are not limitative. That is, with or in the place of the above effects, the technology according to the present disclosure may achieve other effects that are clear to those skilled in the art from the description of this specification.

Additionally, the present technology may also be configured as below.
(1) An information processing apparatus including:
   an estimation unit that estimates a comfort/discomfort level of a target person on the basis of a non-verbal expression extracted from sound information related to the target person; and
   an output control unit that performs output control on the basis of the comfort/discomfort level estimated by the estimation unit.
(2) The information processing apparatus according to (1), in which the non-verbal expression extracted from the sound information includes at least one of a speech speed, a speech frequency, a speech volume, a speech pause, speech clarity, or a filler word of the target person.
(3) The information processing apparatus according to (1) or (2), in which the estimation unit estimates the comfort/discomfort level of the target person on the basis of a non-verbal expression extracted from image information related to the target person.
(4) The information processing apparatus according to (3), in which the non-verbal expression extracted from the image information includes at least one of a face expression, a line of sight, blinking, or psychological motion of the target person.
(5) The information processing apparatus according to any of (1) to (4), in which the target person includes a person that is not able to control output information due to a physical barrier.
(6) The information processing apparatus according to any of (1) to (5), in which the target person includes a person that is not able to control output information due to a psychological barrier.
(7) The information processing apparatus according to any of (1) to (6), in which the output control unit performs output control on the basis of a fact that the comfort/discomfort level of the target person is below a threshold value.
(8) The information processing apparatus according to any of (1) to (7), in which the output control unit causes an information output to stop on the basis of a fact that the comfort/discomfort level of the target person is below a threshold value.
(9) The information processing apparatus according to any of (1) to (8), in which the output control unit causes an output expression to be changed on the basis of a fact that the comfort/discomfort level of the target person is below a threshold value.
(10) The information processing apparatus according to any of (1) to (9), in which the output control unit causes output modal changing to be performed on the basis of a fact that the comfort/discomfort level of the target person is below a threshold value.
(11) The information processing apparatus according to any of (1) to (10), in which the output control unit causes second recommendation information that is different from first recommendation information to be output on the basis of a fact that the comfort/discomfort level of the target person, which is estimated after an output of the first recommendation information, is below a threshold value.
(12) The information processing apparatus according to any of (1) to (11), in which in a case in which the estimation unit estimates the comfort/discomfort levels of a plurality of target persons, the output control unit performs output control on the basis of presence of target persons with the comfort/discomfort levels below a threshold value.
(13) The information processing apparatus according to any of (1) to (12), in which in a case in which the estimation unit estimates the comfort/discomfort levels of a plurality of target persons, the output control unit performs output control for improving a sum of the comfort/discomfort levels.
(14) The information processing apparatus according to any of (1) to (13), in which the output control unit performs output control on the basis of learning data.
(15) The information processing apparatus according to any of (1) to (14), in which the output control unit performs output control on the basis of learning data that is specific to the target person.
(16) The information processing apparatus according to any of (1) to (15), in which the output control unit performs output control on the basis of learning data related to a cluster into which the target person is classified.
(17) The information processing apparatus according to any of (1) to (16), in which in a case in which output control based on the comfort/discomfort level is performed, the output control unit causes a reason that the output control has been performed to be output.
(18) The information processing apparatus according to any of (1) to (17), in which the estimation unit estimates the comfort/discomfort level of the target person on the basis of a non-verbal expression extracted from sensor information related to the target person.
(19) An information processing apparatus including:
   a collecting unit that collects sound information related to a target person; and
   an output unit that performs an information output based on a control signal,
   in which the output unit performs an information output based on the control signal that is generated on the basis of a comfort/discomfort level of the target person, which is estimated from a non-verbal expression extracted from the sound information.
(20) The information processing apparatus according to (19), in which the sound information includes at least one of a speech speed, a speech frequency, a speech volume, a speech pause, speech clarity, or a filler word of the target person.

### Reference Signs List

- 10: information processing terminal
- 110: collecting unit
- 120: output unit
- 130: server communication unit
- 20: information processing server
- 210: estimation unit
- 220: output control unit
- 230: learning unit
- 240: learning DB
- 250: communication unit
- 30: network

## Claims

1. An information processing apparatus comprising:
an estimation unit that estimates a comfort/discomfort level of a target person on a basis of a non-verbal expression extracted from sound information related to the target person; and
an output control unit that performs output control on a basis of the comfort/discomfort level estimated by the estimation unit.

2. The information processing apparatus according to claim 1, wherein the non-verbal expression extracted from the sound information includes at least one of a speech speed, a speech frequency, a speech volume, a speech pause, speech clarity, or a filler word of the target person.

3. The information processing apparatus according to claim 1, wherein the estimation unit estimates the comfort/discomfort level of the target person on a basis of a non-verbal expression extracted from image information related to the target person.

4. The information processing apparatus according to claim 3, wherein the non-verbal expression extracted from the image information includes at least one of a face expression, a line of sight, blinking, or psychological motion of the target person.

5. The information processing apparatus according to claim 1, wherein the target person includes a person that is not able to control output information due to a physical barrier.

6. The information processing apparatus according to claim 1, wherein the target person includes a person that is not able to control output information due to a psychological barrier.

7. The information processing apparatus according to claim 1, wherein the output control unit performs output control on a basis of a fact that the comfort/discomfort level of the target person is below a threshold value.

8. The information processing apparatus according to claim 1, wherein the output control unit causes an information output to stop on a basis of a fact that the comfort/discomfort level of the target person is below a threshold value.

9. The information processing apparatus according to claim 1, wherein the output control unit causes an output expression to be changed on a basis of a fact that the comfort/discomfort level of the target person is below a threshold value.

10. The information processing apparatus according to claim 1, wherein the output control unit causes output modal changing to be performed on a basis of a fact that the comfort/discomfort level of the target person is below a threshold value.

11. The information processing apparatus according to claim 1, wherein the output control unit causes second recommendation information that is different from first recommendation information to be output on a basis of a fact that the comfort/discomfort level of the target person, which is estimated after an output of the first recommendation information, is below a threshold value.

12. The information processing apparatus according to claim 1, wherein in a case in which the estimation unit estimates the comfort/discomfort levels of a plurality of target persons, the output control unit performs output control on a basis of presence of target persons with the comfort/discomfort levels below a threshold value.

13. The information processing apparatus according to claim 1, wherein in a case in which the estimation unit estimates the comfort/discomfort levels of a plurality of target persons, the output control unit performs output control for improving a sum of the comfort/discomfort levels.

14. The information processing apparatus according to claim 1, wherein the output control unit performs output control on a basis of learning data.

15. The information processing apparatus according to claim 1, wherein the output control unit performs output control on a basis of learning data that is specific to the target person.

16. The information processing apparatus according to claim 1, wherein the output control unit performs output control on a basis of learning data related to a cluster into which the target person is classified.

17. The information processing apparatus according to claim 1, wherein in a case in which output control based on the comfort/discomfort level is performed, the output control unit causes a reason that the output control has been performed to be output.

18. The information processing apparatus according to claim 1, wherein the estimation unit estimates the comfort/discomfort level of the target person on a basis of a non-verbal expression extracted from sensor information related to the target person.

19. An information processing apparatus comprising:
a collecting unit that collects sound information related to a target person; and
an output unit that performs an information output based on a control signal,
wherein the output unit performs an information output based on the control signal that is generated on a basis of a comfort/discomfort level of the target person, which is estimated from a non-verbal expression extracted from the sound information.

20. The information processing apparatus according to claim 19, wherein the sound information includes at least one of a speech speed, a speech frequency, a speech volume, a speech pause, speech clarity, or a filler word of the target person.
